# EUROPEAN PATENT SPECIFICATION

(11) **EP 3 736 477 B1**
(45) Date of publication and mention of the grant of the patent: **06.12.2023**
(21) Application number: 20173029.8
(22) Date of filing: 05.05.2020
(51) Int. Cl.: F16L 23/08, F16L 23/10

(54) **PIPE COUPLINGS AND USES THEREOF**
ROHRVERBINDUNGEN UND VERWENDUNGEN DAFÜR
RACCORDS DE TUYAUTERIE ET LEURS UTILISATIONS

(30) Priority: 06.05.2019 BE 201905296
(43) Date of publication of application: 11.11.2020
(73) Proprietor: Pro Piping Products SRL, Sanandrei, Judet Timis (RO)
(72) Inventor: DE GIETER, John, 9450 Haaltert (BE); VEREECKEN, Luc, 9310 Meldert (BE); TOTTE, Lieven, 9140 Elversele (BE)
(74) Representative: De Clercq & Partners

(56) References cited:
- KR-B1- 101 380 215
- US-A- 5 415 435
- US-A1- 2007 176 425
- US-A1- 2013 249 212

## Description

### FIELD OF THE INVENTION

The present invention relates to tube couplings. More particularly, the present invention relates to mechanical tube couplings and to methods for using and producing such products.

### BACKGROUND

Mechanical couplings for joining the ends of tube or pipe elements usually comprise mutually connectable segments which are fittable around the ends of the coaxially aligned tube or pipe elements. Such couplings are also referred to as segmented couplings.

Pipeline systems have to be able to withstand relatively large pressures, for example such as pipelines in gas or oil production. A significant advantage of the use of segmented couplings is the possibility of assembling pipeline systems quickly and in situ.

A problem of existing segmented couplings is the fact that the coupling does not squeeze around the tube ends sufficiently or squeezes around them incorrectly, leading to a deformation of the mechanical coupling, which can ultimately result in the general failure of the coupling. In addition, there is often a degree of variation in the diameter and width of the grooves in the tubes around which the tube couplings are to be fitted, as a result of which it is not always possible to ensure a strong clamping action. Some existing tube couplings comprise two arc-shaped coupling elements, wherein the forward and backward end of the same coupling element comprise inclined faces which are inclined in opposite directions. During fitting of two such coupling elements, this results in an opposite rotary movement of these coupling elements with respect to each other about an axis which runs substantially perpendicular to the axis of the tube elements. This rotation deforms the tube coupling and/or result in few points of contact and/or few and/or small surfaces of contact between the coupling elements and the tube elements.

Pipe coupling support clamps are, for example, described in US 2007/0176425 and US 5,415,435.

Consequently, there is a need for segmented couplings which are sufficiently strong and which do not suffer from undesirable deformation. Consequently, there is a need for segmented couplings which ensure that the position remains securely aligned. There is consequently a need for segmented couplings which provide a better distribution of forces. There is likewise a need for segmented couplings which provided additional clamping action. There is also a need for segmented couplings which can be used even when there is a variation in the grooves of the tubes. There is therefore a need for segmented couplings which can be fitted quickly, preferably without taking the coupling apart.

### SUMMARY OF THE INVENTION

The present invention and preferred embodiments thereof form a solution for one or more of these needs.

The invention provides herein a segmented tube coupling. The segmented tube coupling comprises at least two arc-shaped coupling segments (also referred to as "shells" herein); wherein each coupling segment has a bolt plate at each end of said coupling segment. Each bolt plate is configured to be mutually connected to an adjacent bolt plate of an adjacent coupling segment; or to an adjacent bolt plate of the same coupling segment when there is only one coupling segment. Preferably, each bolt plate comprises an opening configured to receive the shank of a bolt through said opening. Each bolt plate comprises a top surface and a bottom surface; wherein the top surface of each bolt plate comprises a cutout, preferably configured to receive the head of an interface piece, a bolt and/or a nut.

The first point of contact which is formed when the bottom surfaces of the two bolt plates touch during tightening, is situated on the outside of the bolt plate with respect to the bolt. This means that the first point of contact is not situated between the bolt and shell. Preferably, in a completely tightened configuration, the bottom surfaces touch each other over a larger surface than only the first points of contact. According to the invention, a segmented tube coupling is provided in which, in the state in which the two arc-shaped coupling elements move towards each other and touch each other, the central angle of one of the arc-shaped coupling segments is greater than 180°, while the central angle of the other is smaller than 180°. According to a preferred embodiment, the central angle greater than 180° is achieved by a bend in the bolt plates.

When only the radially outward points of the bottom surfaces of the adjacent bolt plates touch each other, the bottom surfaces of the two bolt plates preferably form an angle α. This angle α is preferably at least +0.5°. When only the most radially outward points of the bottom surfaces of the adjacent bolt plates touch each other, the bottom surfaces of the two bolt plates preferably form an angle α of at least +0.5°. The radially outward points typically touch each other in a partly tightened configuration. In a completely non-tightened configuration, they typically do not touch each other. In a completely tightened configuration, the bottom surfaces touch each other over a larger surface than only the (most) radially outward points. This kind of configuration ensures that additional clamping action can be provided and/or that deviations in groove diameters of the tubes are compensated for. If the angle α were equal to 0°, as would be the case with conventional coupling segments, this additional clamping action is not possible. With 'angled pads', which are also mentioned in the literature, there is the additional drawback that these turn with respect to each other, resulting in an uneven load. According to a finite element analysis, the present invention achieves a significantly greater clamping action than the prior art. The position of the coupling remains accurately aligned, thus ensuring a better distribution of forces. The coupling can also be used even when there is a variation in the grooves of the tubes. In addition, the coupling can be fitted quickly, preferably without taking the coupling apart.

As a result thereof, the bolts are preferably situated as close as possible against the arc of the shells and close to the most important clamping faces, without colliding shells in between. The load is very even, for the shells, the tubes, and the bolts. The bolts are practically not subjected to any flexural strain.

In a preferred embodiment, the angle α is at least +0.5° and at most +10.0°, preferably at least +1.0° and at most +8.0°, preferably at least +2.0° and at most +6.0°, preferably at least +3.0° and at most +5.0°, preferably approximately +4.0°.

In a preferred embodiment, the bottom surface of each bolt plate is configured to allow the one or more most radially outward points of the bottom surface to touch the one or more most radially outward points of the bottom surface of an adjacent bolt plate of an adjacent coupling segment first when mutually connecting adjacent bolt plates of adjacent coupling segments.

In a preferred embodiment, a triangular prism-shaped opening is present between the bottom surfaces of the adjacent bolt plates when the one or more most radially outward points of the bottom surfaces of the adjacent bolt plates touch each other when mutually connecting adjacent bolt plates of adjacent coupling segments.

In a preferred embodiment, the triangular prism-shaped opening between the bottom surfaces of the adjacent bolt plates has a central angle β, measured from the centre of the tube coupling, of at least 1.0° when only the most radially outward points of the bottom surfaces of the adjacent bolt plates touch each other. The radially outward points typically touch each other in a partly tightened configuration, during tightening of the bolts. In a completely non-tightened configuration, they typically do not touch each other. In a completely tightened configuration, the bottom surfaces touch each other on a larger surface than only the most radially outward points. This means that, during tightening of the bolts, the radially outward points touch each other first, and then, during further tightening of the bolts, the surface on which the bottom surfaces of the adjacent bolt plates touch each other increases from these radially outward points in the direction of the centre of the tube coupling or in other words in the direction towards the bolt.

In a preferred embodiment, the bolt is a T-shaped bolt which comprises at least one arc-shaped side, and preferably the top surface of each bolt plate comprises a cutout which is configured to be coupled to an interface piece, a head of a T-shaped bolt and/or a nut which comprises at least one arc-shaped side. In an alternative embodiment, the bolt and/or cutout is flat.

In a preferred embodiment, the cutout in the top surface of each bolt plate is arc-shaped, preferably, the bending radius of the arc-shaped cutout is greater than or equal to the bending radius of the arc-shaped side of the interface piece, the bolt and/or the nut. In an alternative embodiment, the cutout is flat, concave or convex.

In a preferred embodiment, the opening in each bolt plate is situated at the lowest point of the arc-shaped cutout in the top surface. In one embodiment, the opening in each bolt plate is situated in the central point of the arc-shaped cutout in the top surface.

In a preferred embodiment, the tube coupling comprises at least two interface pieces, at least two bolts, and/or at least two nuts. In some embodiments, the shell is provided with a screw thread, in which case the nuts are not necessary.

The present invention also comprises an assembly comprising the segmented tube coupling such as described herein, or an embodiment thereof. The assembly comprises two tube segments, each comprising a tube end, wherein a first arc-shaped coupling segment and a second arc-shaped coupling segment are positioned perpendicular to the axis in which the tube segments are aligned, with the inner surface of said first arc-shaped coupling segment and said second arc-shaped coupling segment touching the outer surface of said tube segments and said tube coupling covering said tube ends.

In a preferred embodiment, the inner arc radius of the coupling segments is smaller than the outer arc radius of the tube segments, preferably the inner arc radius of the coupling segments is approximately equal to the outer arc radius of a groove in the tube segments.

The present invention also comprises a method for producing a segmented tube coupling as described herein or an embodiment thereof.

The present invention also comprises a method for coupling two tube elements to each other, wherein each tube element comprises at least one tube end, using a segmented tube coupling as described herein or an embodiment thereof, the method comprises:
(i) inserting the two tube elements in a central space formed by at least two prefitted arc-shaped coupling segments of the tube coupling as described herein; and
(ii) fastening the at least two interface pieces, at least two bolts and/or at least two nuts, so that the first arc-shaped coupling element and the second arc-shaped coupling element move towards each other and come into contact with each other.

In a preferred embodiment, when fastening the at least two interface pieces, at least two bolts and/or at least two nuts, the one or more most radially outward points of the bottom surface of a first bolt plate of a first coupling segment first touch the one or more most radially outward points of the bottom surface of a second, adjacent bolt plate of a second, adjacent coupling segment.

The present invention also comprises use of a tube coupling as described herein or an assembly as described herein for coupling two tube ends to each other.

### DESCRIPTION OF THE FIGURES

**FIG. 1A** shows a front view of a segmented tube coupling according to a preferred embodiment in the state in which two arc-shaped coupling elements move towards each other and come into contact with each other, in which the circle indicates a bend. One of the central angles is greater than 180°, while the other central angle is smaller than 180°.
**FIG. 1B** shows a front view of a segmented tube coupling according to a preferred embodiment in an open state with a sealing means.
**FIG. 2A** shows a segmented tube coupling according to a preferred embodiment in the state in which two arc-shaped coupling elements move towards each other and come into contact with each other.
**FIG. 2B** shows a segmented tube coupling according to a preferred embodiment in an open state comprising a sealing means.
**FIG. 3** shows a cross section of a segmented tube coupling according to a preferred embodiment comprising a sealing means. The angles α and β are denoted here.
**FIG. 4** shows a coupling of two tube segments by means of a segmented tube coupling according to a preferred embodiment.
**FIG. 5** shows the comparison between a segmented tube coupling according to the invention and a segmented tube coupling according to the prior art.

### DETAILED DESCRIPTION

The present invention will be described with reference to particular embodiments, but the invention is not limited thereto, because it is only limited by the claims. Reference numerals in the claims should not be interpreted as limiting their scope.

As used below in this text, the singular forms "a", "an", and "the" include references to both the singular and the plural, unless the context clearly indicates otherwise. The terms "comprising", "comprises" and "comprise" as used herein are synonymous with "including", "include" or "containing", "contains" and are inclusive or open and do not exclude additional unmentioned parts, elements or method steps. The terms "comprising", "comprises" and "comprise" when used to refer to said parts, elements or method steps also include embodiments which "consist of" said parts, elements or method steps.

Unless defined otherwise, all terms used to disclose the invention, including technical and scientific terms, have the meaning which an average person skilled in the art usually gives them. For further guidance, definitions for the terms which are used in the description are included in order to further understand the teaching of the present invention. The terms or definitions used herein are provided for the sole purpose of assisting in the understanding of the invention.

The present invention relates to tube couplings for coupling two tube elements to each other, or on the other hand coupling two tube ends of two tube elements to each other, the tube coupling typically comprising at least two arc-shaped coupling elements which are configured to be connected to each other. After fitting the tube coupling around two coaxially aligned tube elements, the two arc-shaped coupling elements are situated around (in the peripheral direction) the two tube elements and opposite each other, with the ventral, concave side (inner side) of an arc-shaped coupling element touching the external, convex side (outer side) of the two tube elements and covering the two tube ends of the tube elements. As is the case with conventional arc-shaped elements, each of the arc-shaped coupling elements of the tube coupling as described herein has a forward and a rearward end. After two tube elements have been coupled to each other using the tube coupling as described herein, the end of the one arc-shaped coupling element touches the end of the other arc-shaped coupling element at the forward ends and backward ends of the arc-shaped coupling elements. The ends of the arc-shaped coupling elements may touch across the entire width of the end or across only a part thereof.

Preferably, the bolt plates allow a degree of deformation, for example in the zone under the bolt head or nut. This has the advantage that additional clamping action can be provided and/or a variation in groove diameters of the tubes can be compensated for. If the angle α were equal to 0°, as is the case with conventional coupling segments, this additional clamping action is not possible. The 'angled pads' which are also mentioned in the literature will have the additional drawback that they turn with respect to each other, resulting in an uneven load. According to a finite element analysis, the present invention achieves a significantly greater clamping action. The arc-shaped components of the coupling segments may or may not allow deformation. Within the same arc-shaped coupling element, each lateral side may have a central angle greater than 180°.

The tube couplings as described herein provide a functional coupling of the tube segments, while the strength and/or integrity of the tube system, of which the tube elements form part, is maintained and sufficiently able to withstand high pressures and/or forces to which the tube system is usually exposed.

The invention provides herein a segmented tube coupling. The segmented tube coupling comprises at least two, arc-shaped coupling segments; wherein each coupling segment has a bolt plate at each end of said coupling segment. In some embodiments, the tube coupling comprises three, four or more coupling segments. Most preferably, the tube coupling comprises exactly two arc-shaped coupling segments, because this has been found to be most advantageous with regard to cost price (number of components, amount of material used, assembly), speed and ease of fitting. A tube coupling comprising at least two coupling segments is advantageous for coupling grooved tubes.

The coupling segments are preferably characterized by an internal arc radius (for example R1 and R2) and/or an internal curve angle (for example θ1 and θ2).

In some embodiments, the tube coupling comprises a first arc-shaped coupling element and a second arc-shaped coupling element; with said first arc-shaped element and said second arc-shaped element each comprising a first (forward) end and a second (rearward) end.

Each bolt plate is configured to be mutually connected to an adjacent bolt plate of an adjacent coupling segment; or to an adjacent bolt plate of the same coupling segment if there is only one coupling segment. Preferably, each bolt plate comprises an opening configured to receive the shank of a bolt through said opening. Preferably, each bolt plate comprises a top surface and a bottom surface; the top surface of each bolt plate comprising a cutout, preferably configured to receive the head of an interface piece, a bolt and/or a nut. An interface piece may be, for example, a 'washer' of a specific design to provide a transition from the concave seat for the bolt head to a face on which the nut can turn.

The first point of contact which is formed when the bottom surfaces of the two bolt plates touch during tightening, is situated on the outside of the bolt plate with respect to the bolt. This means that the first point of contact is not situated between the bolt and shell. When only the most radially outward points of the bottom surfaces of the adjacent bolt plates touch each other, the bottom surfaces of the two bolt plates preferably form an angle α of at least +0.5°. The radially outward points typically touch each other in a partly tightened configuration, during the tightening of the bolts. In a completely non-tightened configuration, they typically do not touch each other. In a completely tightened configuration, the bottom surfaces touch each other over a larger surface than only the most radially outward points. In this case, it is clear that the angle α extends in a plane virtually perpendicular to a central longitudinal axis through the centre of the tube coupling. In other words, the angle α has an angular point on the most radially outward points of the bottom faces of the adjacent bolt plates and extends in the direction of the centre of the tube coupling or in other words in the direction of the bolts. Or in other words, the centre of the tube coupling is situated between the two limbs of the angle α. In this case, it is clear that this angle α is formed between the part of the bottom surfaces of the two bolt plates at the most radially outward end, and thus radially outward with respect to the bolt.

In a preferred embodiment, the angle α is at least +0.5° and at most +10.0°, preferably at least +1.0° and at most +8.0°, preferably at least +2.0° and at most +6.0°, preferably at least +3.0° and at most +5.0°, preferably approximately +4.0°.

This angle may largely (or completely) be formed by one of the two bolt plates. Preferably, however, the angle is equally formed by both bolt plates. In some embodiments, the bolt plates of the at least two coupling segments are identical. In some embodiments, the at least two coupling segments are identical.

In a preferred embodiment, the bottom surface of each bolt plate is configured to allow the one or more most radially outward points of the bottom surface to touch the one or more most radially outward points of the bottom surface of an adjacent bolt plate of an adjacent coupling segment first when mutually connecting adjacent bolt plates of adjacent coupling segments.

In a preferred embodiment, a triangular prism-shaped opening is present between the bottom surfaces of the adjacent bolt plates when the one or more most radially outward points of the bottom surfaces of the adjacent bolt plates touch each other when mutually connecting adjacent bolt plates of adjacent coupling segments. In some embodiments, the bottom surfaces of the adjacent bolt plates form a rectangle or parallelogram.

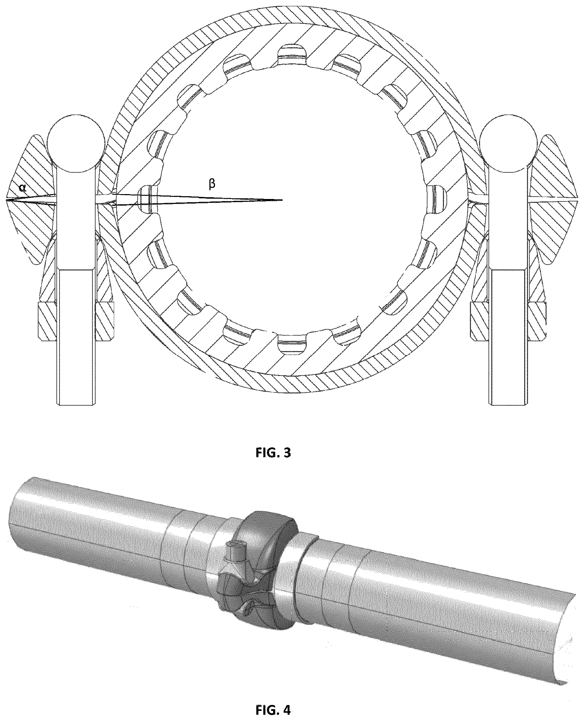

In a preferred embodiment, the triangular prism-shaped opening between the bottom surfaces of the adjacent bolt plates forms a central angle β, measured from the centre of the tube coupling, of at least 1.0° when only the most radially outward points of the bottom surfaces of the adjacent bolt plates touch each other, preferably of at least 2.0°, for example of at least 3.0°, for example of at least 4.0°, for example of at least 5.0°, for example of at least 6.0°, for example of at least 7.0°, for example of at least 8.0°, for example of at least 9.0°, for example of at least 10.0°. In this case, it is clear that the central angle β has an angular point at the location of the centre of the tube coupling and that the limbs of the central angle β extend in a plane perpendicular to the longitudinal axis through the centre of the tube coupling in a radially outward direction. In other words, the angular point of the central angle β is situated on the radially inward side with respect to the bolt. It is clear, as is shown for example in Fig. 3, that in this way, a bend is formed in the bolt plates by the combination of the angle α and the central angle β, as described above.

In embodiments that are not part of the invention, both lateral sides of the arc-shaped coupling element have a central angle smaller than 180°. In embodiments that are not part of the invention, both lateral sides of the arc-shaped coupling element have a central angle of at most 180°, at most 175°, at most 170°, at most 165°, at most 160°, at most 155°, at most 150°, at most 145°, at most 140°, at most 135°, at most 130°, at most 125°, or at most 120°, at most 115°, at most 110°, at most 100°, at most 90°, at most 80°, at most 70°, or at most 60°. According to the invention, one lateral side of the arc-shaped coupling element has a central angle greater than 180°, for example greater than 181°, for example greater than 185°, for example greater than 190°, for example greater than 195°, for example greater than 200°. In embodiments that are not part of the invention, both lateral sides of the arc-shaped coupling element have a central angle greater than 180°, for example greater than 181°, for example greater than 185°, for example greater than 190°, for example greater than 195°, for example greater than 200°. Preferably, this is embodied by a bend in the bolt plates. According to the invention the segmented tube coupling contains two arc-shaped coupling elements, it is such that the central angle of one of the arc-shaped coupling segments is greater than 180° in the state in which the two arc-shaped coupling elements move towards each other and come into contact with each other, whereas the central angle of the other is smaller than 180°. As can be seen, for example, in Fig. 3, the arc-shaped coupling element is provided with a central angle greater than 180° by means of a bend in the bolt plates. As can furthermore be seen, according to this exemplary embodiment, a complementary bend with a central angle smaller than 180° is formed in the opposite contact surface of the other arc-shaped coupling segment. In other words, the limbs of the central angle β, as shown in Fig. 3, each form a different angle with respect to the radial direction between the centre of the tube coupling and the contact point formed by the radially outward end, or the angular point of angle α. Preferably, the limbs of angle α also form a different angle with respect to this radial direction defined by the centre of the tube coupling and the angular point of angle α. It is thus clear that the two arc-shaped coupling elements are in this way complementary, but not identical and/or rotationally symmetrical around the centre of the tube coupling. According to the illustrated embodiment, both arc-shaped coupling elements of the tube coupling are preferably mirror-symmetrical with respect to a plane along the vertical direction in Fig. 3 and through the centre of the tube coupling. Or in other words with respect to a mirror plane determined by the direction of the longitudinal axis through the centre of the tube coupling and perpendicular to the direction determined by the connecting line through the angular points of the angle α of the two pairs of adjacent bolt plates situated on either side of the centre.

The term "central angle" as used herein refers to the inner angle which is formed by drawing a line from the centre of an imaginary circle, which would result if the ends of an arc would be extended to the point where the ends come into contact with each other, to each of the forward and backward ends of an arc-shaped coupling element. The person skilled in the art will understand that the sum of all central angles of the lateral sides of the first and the second arc-shaped coupling element which are situated on the same side during fitting, and thus adjacent to the outside of the same tube element, and the central angles β is 360° in total for each of the bolt plates.

In certain embodiments, the arc-shaped coupling elements are configured to be connected to each other and/or to be fastened to each other, preferably by means of one or more connecting elements, preferably bolt plates.

In certain embodiments, the arc-shaped coupling elements comprise one or more connecting elements, preferably bolt plates, on the outside of the arc-shaped coupling element and the one or more connecting elements extend radially outward with respect to the arc-shaped coupling element.

In certain embodiments, the arc-shaped coupling elements comprise one or more connecting elements, preferably bolt plates, on the forward and/or backward end of said first and/or second arc-shaped coupling element.

In certain embodiments, the one or more connecting elements, preferably bolt plates, are configured to receive one or more fastening elements.

In certain embodiments, the arc-shaped coupling elements comprise bolt plates formed as two radially outward projections, wherein the projections each comprise an opening which is configured to comprise one or more fastening elements. More preferably, the opening is configured to comprise a threaded bolt, preferably a T bolt. The term "fastening element" as used herein refers to a means which can be used, optionally in cooperation with other fastening elements, to fasten, fix, bond or secure two or more elements to each other temporarily or non-releasably. Non-limiting examples of fastening elements are bolts, nuts, nails and screws. Preferably, T bolts are used. Fastening elements may also comprise interface pieces such as washers (optionally deformed).

In certain embodiments, the one or more connecting elements and/or one or more fastening elements are configured to move the first arc-shaped coupling element and second arc-shaped coupling element towards each other in such a way that the ends of the first arc-shaped coupling element and the ends of the second arc-shaped coupling element touch each other and/or to allow the inner sides of the lateral sides of the first and second arc-shaped coupling element to adjoin the outer sides of the tube elements, or the outer sides of the peripheral grooves of the tube elements, during assembly.

In certain embodiments, the first arc-shaped coupling element and the second arc-shaped coupling element each comprise a threaded bolt, preferably a T bolt, and a nut. In some preferred embodiments, the first arc-shaped coupling element comprises two threaded bolts, preferably a T bolt, and the second arc-shaped coupling element comprises 2 nuts.

In a preferred embodiment, the bolt is a T-shaped bolt which comprises at least one arc-shaped side, and preferably the top surface of each bolt plate comprises a cutout which is configured to be coupled to an interface piece, a head of a T-shaped bolt, and/or a nut which comprises at least one arc-shaped side. The bolt may also be of a different shape, for example a hexagonal bolt. Preferably, an interface piece, such as a washer, is then used.

The cutout is preferably rounded, preferably arc-shaped. Due to an arc-shaped cutout and associated bolt head or interface piece, hardly any bending occurs in the bolt and the load on the latter is therefore applied more correctly. As a result thereof, failures occur less quickly and the option is offered, if desired, to choose a principle in which the bolt is tightened instead of the nut.

In a preferred embodiment, the cutout in the top surface of each bolt plate is arc-shaped, preferably the bending radius of the arc-shaped cutout is greater than or equal to the bending radius of the arc-shaped side of the interface piece, the bolt (preferably T-shaped) and/or the nut. Preferably, the bending radius is greater, because this allows deformation of the bolt plate. In some embodiments, the arc length of the arc-shaped cutout is greater than the arc length of the arc-shaped side of the interface piece, the bolt (preferably T-shaped) and/or the nut. This facilitates fitting and ensures that the bolt is tightened in the lowest or central point. Preferably, the arc-shaped cutout in the bolt plate counteracts rotation (for example of a bolt).

In a preferred embodiment, the opening in each bolt plate is situated in the lowest point of the arc-shaped cutout in the top surface. In one embodiment, the opening in each bolt plate is situated in the central point of the arc-shaped cutout in the top surface.

In a preferred embodiment, the tube coupling comprises at least two interface pieces, at least two bolts (preferably T-shaped), and/or at least two nuts. With a tube coupling consisting of only one coupling segment, the tube coupling preferably comprises at least one interface piece, at least one bolt (preferably T-shaped), and/or at least one nut. Preferably, the tube coupling comprises exactly the same number of interface pieces, bolts (preferably T-shaped) and/or nuts as coupling segments. A tube coupling of exactly two coupling segments may comprise, for example, exactly two bolts and exactly two nuts. In some embodiments, the bolt locks in the seat of the bolt plate. In some embodiments, the nut locks in the seat of the bolt plate.

In certain embodiments, the arc-shaped coupling element is made from a metal or a combination of metals. Preferably, the arc-shaped coupling element is made from metal, preferably iron, for example steel, more preferably nodular cast iron.

In certain embodiments, the arc-shaped coupling element is elastically deformable. In other embodiments, the arc-shaped coupling element is not elastically deformable. In certain embodiments, the arc-shaped coupling element is not plastically deformable. If the arc-shaped coupling element does not plastically deform before, during or after assembly of the tube coupling as described herein, the arc-shaped coupling element can be re-used more often.

In certain embodiments, the bolt plates are made from a metal or a combination of metals. Preferably, the bolt plates are made from iron, for example steel, more preferably nodular cast iron.

In certain embodiments, the bolt plates are elastically deformable. In other embodiments, the bolt plates are not elastically deformable. In certain embodiments, the bolt plates are not plastically deformable. If the bolt plates deform plastically before, during or after assembly of the tube coupling as described herein, the arc-shaped coupling element can be re-used less often.

Preferably, the bolt plates are made from the same material as the arc-shaped coupling elements, most preferably in one piece.

The present invention also comprises an assembly comprising the segmented tube coupling as described herein or an embodiment thereof. The assembly comprises two tube segments, each comprising a tube end, wherein a first arc-shaped coupling segment and a second arc-shaped coupling segment are positioned perpendicular to the axis in which the tube segments are aligned, with the inner surface of said first arc-shaped coupling segment and said second arc-shaped coupling segment touching the outer surface of said tube segments and said tube coupling covering said tube ends.

The tube segments preferably each comprise a groove, suitable for the installation of the tube coupling. The groove is preferably considered to form part of the outer surface. Preferably, the coupling segments only come into contact with the groove and not with the other part of the tubes.

The term "tube element", "tube segment", "pipe segment" or "pipe element" as used herein, refers to every tube-like element or component having a tube-like and/or concave, cylindrical shape. Non-limiting examples of tube elements comprise tube fittings, such as elbows and T-pieces, as well as liquid-controlling components, such as valves, reducing means, screens, restrictors, pressure regulators and such.

In certain embodiments, the periphery of the outside of the tube elements is circular. In certain embodiments, the tube elements are not plastically deformable.

In certain embodiments, the outer diameters of the first tube element and the second tube element are identical.

The term "tube end" or "pipe end" as used herein, refers to the open extremity or open end of a tube or tube element.

In certain embodiments, one or both tube elements comprise a circumferential groove on the outside of the tube element.

The term "circumferential groove" as used herein refers to a notch or cutout in the outer wall of one or of both tube segments which is present along the entire periphery of the tube segment. The circumferential groove usually has two lateral side walls which preferably run parallel to the radius of the tube segment and one base wall which is preferably perpendicular to the radius of the tube segment. The presence of a circumferential groove in the outer wall of one or both tube segments to be coupled together usually contributes to the mechanical securing of the tube coupling and the tube segments.

The circumferential groove is preferably situated close to the tube end.

In certain embodiments, the tube segment comprises at least one tube end and a circumferential groove with two lateral side walls, with the lateral side wall which is closest to the tube end being positioned at a distance of at most 44 mm, preferably at most 40 mm, preferably at most 34 mm, from the tube end.

In certain embodiments, the tube coupling comprises one or more sealing means. The one or more sealing means help to prevent that which is on the inner side (inside) of the tube element from leaking to the outer side (outside) of the tube element after fitting of the tube coupling around the tube elements.

The one or more sealing means are preferably positioned between the first and the second lateral sides of an arc-shaped coupling element.

In certain embodiments, the tube coupling comprises a flexible and/or resilient sealing means. The sealing means is preferably deformable during fitting of the tube coupling as described herein.

In certain embodiments, the one or more sealing means are made from one or more elastomers. Non-limiting examples of elastomers are EPDM, elastane, neoprene, polyurethane (PUR), natural rubber and siloxanes.

In certain embodiments, the tube coupling comprises an annular sealing means.

In certain embodiments, the annular sealing means has a radius which is greater than the arc radius of the arc-shaped coupling elements.

In certain embodiments, after fitting, the annular sealing means has a radius which is greater than the tube, for example 5 mm greater than the tube, for example 8 mm greater than the tube, for example 10 mm greater than the tube. In certain embodiments, the annular sealing means comprises a first lateral side and a second lateral side, wherein the first and/or second lateral side of the annular sealing means comprises an edge which projects radially inward, wherein this edge is present along the entire periphery of the sealing means. This edge reinforces the sealing force between the annular sealing means and the outside of the tube ends after fitting. Preferably, the first and the second lateral side of the annular sealing means have such a radially inwardly projecting edge.

In certain embodiments, the medial portion of the annular sealing means comprises a radially inward projection, in which case this projection is present along the entire periphery, or along a part of the periphery, of the sealing means. After fitting, this projection is typically positioned between the two tube ends and ensures a correct positioning of the sealing means with respect to the two tube ends.

In certain embodiments, the annular sealing means is bilaterally symmetrical.

In a preferred embodiment, the inner arc radius of the coupling segments is smaller than the outer arc radius of the tube segments, preferably the inner arc radius of the coupling segments is approximately equal to the outer arc radius of a groove in the tube segments.

The lateral sides of the arc-shaped coupling element are usually the far left and far right sides of the coupling element which follow the general arc shape of the coupling element and which are configured such that, after fitting, the inner surface of these lateral sides adjoins the outer surface of the tube segments to be coupled together, for example the outer surface of the circumferential groove of the tube segments to be coupled together. Usually, the medial portion of the arc-shaped coupling element is situated between these lateral sides.

In certain embodiments, the bending radius of the arc-shaped coupling element is smaller than or equal to the radius of the outer side of the tube elements to be coupled, and optionally greater than or equal to the radius of the circumferential groove in the outer side of the tube elements to be coupled.

In certain embodiments, the bending radius of the first lateral side and the bending radius of the second lateral side of the arc-shaped coupling element are smaller than or equal to the radius of the outer side of the tube elements.

In certain embodiments, when the tube elements comprise a circumferential groove, the bending radius of the first lateral side and the bending radius of the second lateral side of the arc-shaped coupling element are smaller than or equal to the radius of the outer side of the tube elements, and optionally greater than or equal to the radius of the circumferential groove in the outer side of the tube elements.

The radius of the outer side of the first tube element may differ from the radius of the outer side of the second tube element. If this is the case, the bending radii of the lateral sides of the arc-shaped coupling elements will be adapted to be able to couple tube elements of different diameters to each other.

More particularly, in certain embodiments, the bending radius of the left lateral side of the arc-shaped coupling element is smaller than or equal to the radius of the outer side of the tube element which will be on the left-hand side of the assembly and the bending radius of the right lateral side of the arc-shaped coupling element is smaller than or equal to the radius of the outer side of the tube element which will be on the left-hand side of the assembly. Optionally, the bending radius of the left lateral side of the arc-shaped coupling element is greater than or equal to the radius of the circumferential groove in the outer side of the tube element which will be on the left-hand side of the assembly. Optionally, the bending radius of the right lateral side of the arc-shaped coupling element is greater than or equal to the radius of the circumferential groove in the outer side of the tube element which will be on the right-hand side of the assembly.

The expression "radius of the circumferential groove" as described herein refers to the radius of the outer surface of the circumferential groove which comes into contact with the lateral side of the arc-shaped coupling element after fitting the tube coupling. The term "bending radius", "rounding radius" or "curvature radius" as used herein, refers to the radius of an imaginary circle which would result if the ends of an arc would be extended to the point where the ends come into contact with each other.

In certain embodiments, the medial portion of the arc-shaped coupling element is configured to comprise one or more sealing means. Such a configuration may mean that the medial portion of the arc-shaped coupling element is situated radially outward with respect to the (far) lateral sides of the arc-shaped coupling element. After fitting the tube coupling around the tube elements as described herein, the medial portion of the first arc-shaped coupling element in such an embodiment will, together with the medial portion of the second arc-shaped coupling element, form an annular duct which may comprise the one or more sealing means, such as a sealing ring. In such a configuration, the bending radius of the medial portion of the arc-shaped coupling element is greater than the bending radius of the first and the second lateral side of the arc-shaped coupling element.

The arc-shaped coupling element also has a certain lateral width, i.e. the distance between the far left side and the far right side, which may be so wide that it makes it possible to cover two coaxially aligned tube ends even if the tube ends do not adjoin one another perfectly and/or there is an open space between the tube ends. The lateral width of the arc-shaped coupling element may also be so wide that it makes it possible for the arc-shaped coupling element to have a greater overlap with the tube elements, which may contribute to the strength of the coupling of the tube elements. The person skilled in the art will understand that, if the tube elements to be coupled together comprise a circumferential groove on their outer side, the lateral width of the arc-shaped coupling element is preferably at most the distance between the far left wall of the circumferential groove of the tube element situated on the left side of the tube coupling and the far right wall of the circumferential groove of the tube element situated on the right-hand side of the tube coupling after fitting, with the tube elements being coaxially aligned and the tube ends of the tube elements facing each other. The lateral width of the arc-shaped coupling element is also partly determined by the thickness of the radially inward projection of the medial portion of the annular sealing means, because, after fitting, this projection will be situated between the two tube ends.

The present invention also comprises a method for producing a segmented tube coupling as described herein or an embodiment thereof.

The present invention also comprises a method for coupling two tube elements to each other, wherein each tube element comprises at least one tube end, using a segmented tube coupling as described herein or an embodiment thereof, the method comprises:
(i) inserting the two tube elements in a central space formed by at least two prefitted arc-shaped coupling segments of the tube coupling as described herein; and
(ii) fastening the at least two interface pieces, at least two bolts (preferably T-shaped) and/or at least two nuts, so that the first arc-shaped coupling element and the second arc-shaped coupling element move towards each other and come into contact with each other.

Preferably, two tube elements are coupled to each other by positioning two arc-shaped coupling elements on either side of the coaxially aligned tube elements, wherein the tube elements, each comprising at least one tube end, face each other with their tube ends, and wherein the bending radius of the arc-shaped coupling elements is perpendicular to the axis on which the tube elements are aligned. Preferably, the ends of the two arc-shaped coupling elements are configured such that the ends of the first arc-shaped coupling element, after fitting around the tube elements, adjoin the ends of the second arc-shaped coupling element completely or partially.

In a preferred embodiment, when fastening the at least two interface pieces, at least two bolts (preferably T-shaped) and/or at least two nuts, the one or more most radially outward points of the bottom surface of a first bolt plate of a first coupling segment first touch the one or more most radially outward points of the bottom surface of a second, adjacent bolt plate of a second, adjacent coupling segment.

As the bolt plates are subjected to a greater degree of deformation, the contact surface between the two ends of the two touching bolt plates becomes increasingly larger towards the inside, until the bolt plates touch each other, approximately at the location of the bolt. As a result thereof, further deformation is halted, preventing excessive deformation and possible failure.

A further aspect provides a method for producing the tube coupling as described herein.

Methods for producing tube couplings consisting of several coupling elements are known to the person skilled in the art. Usually, the components of the tube coupling are produced separately and these components are then fitted together to form a tube coupling.

A non-limiting example of producing components of a tube coupling, such as an arc-shaped coupling element, is heating, melting, mixing and transferring the raw material, such as a metal, in a heat-resistant mould having a desired shape, then allow the mould containing the raw material to cool and remove the mould in order thus to obtain the formed product.

A further aspect provides a mould for producing the first and/or the second arc-shaped coupling element as described herein.

In certain embodiments, the mould is heat-resistant.

The terms "mould" or "die" as used herein refer to a concave or convex model which is the counterpart of the desired product to be produced. The mould as described herein will be the opposite shape of the arc-shaped coupling element as described herein.

The present invention also comprises the use of a tube coupling as described herein or an assembly as described herein for coupling two tube ends to each other.

Similarly, a subsequent aspect provides the use of the tube coupling as described herein for determining if a tube coupling as described herein is suitable for coupling two tube elements to each other, in which each of the two tube elements comprises a circumferential groove, preferably at the end of the tube element.

The person skilled in the art will understand that, in certain embodiments, the use of the tube coupling as described herein for determining whether a tube coupling as described herein is suitable for coupling two tube elements to each other, in which each of the two tube elements comprises a circumferential groove at the end of the tube element, may comprise the same steps as the method for determining whether a tube coupling as described herein is suitable for coupling two tube elements to each other as has been described elsewhere in this document.

### EXAMPLES

### Example 1

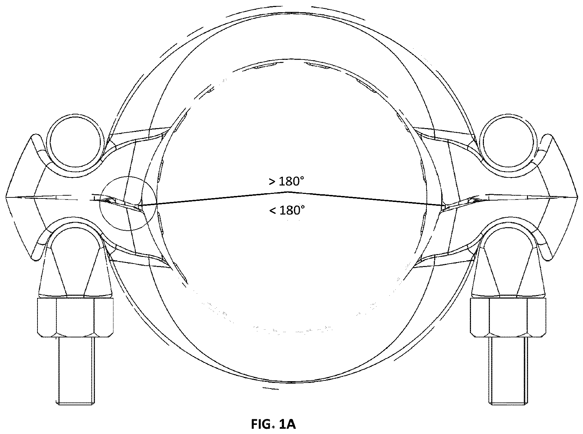

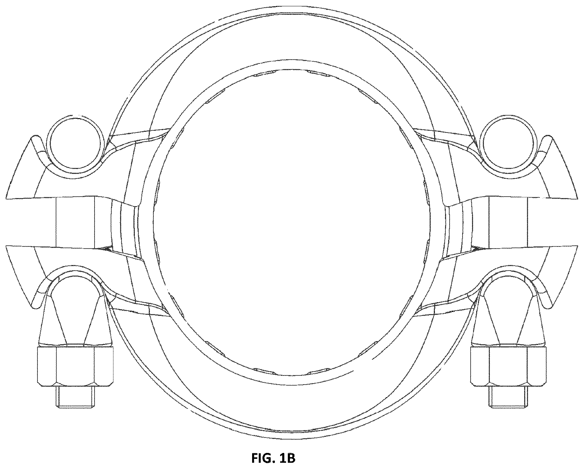

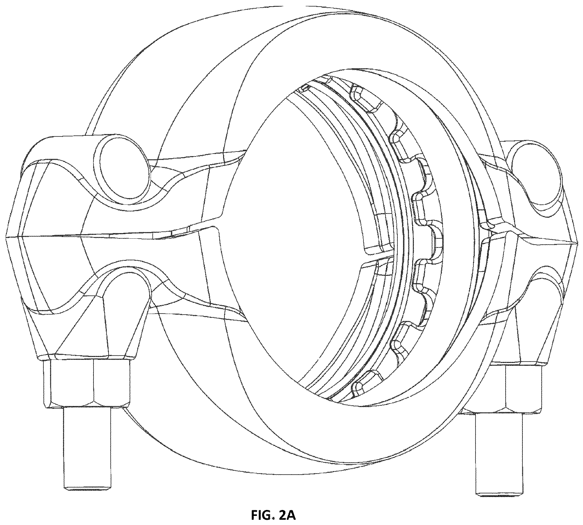

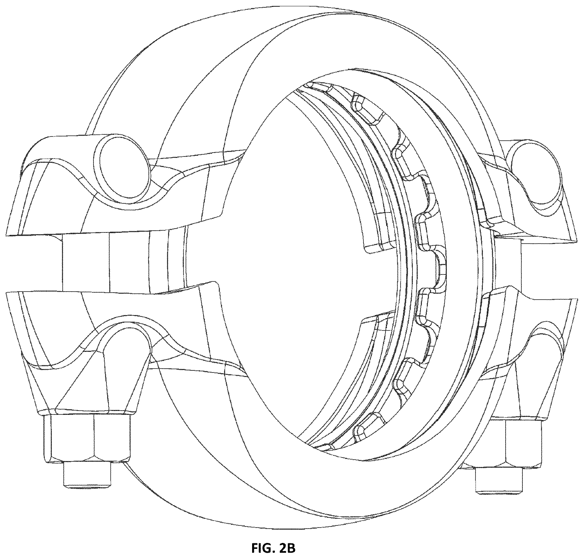

Tube couplings according to preferred embodiments of the invention are illustrated in **FIGS. 1** and **2****.** A cross section of a tube coupling according to a preferred embodiment of the invention is illustrated in **FIG.3****.** An example of an assembly of a tube coupling which connects two tube segments to each other is illustrated in **FIG.4****.**

### Example 2

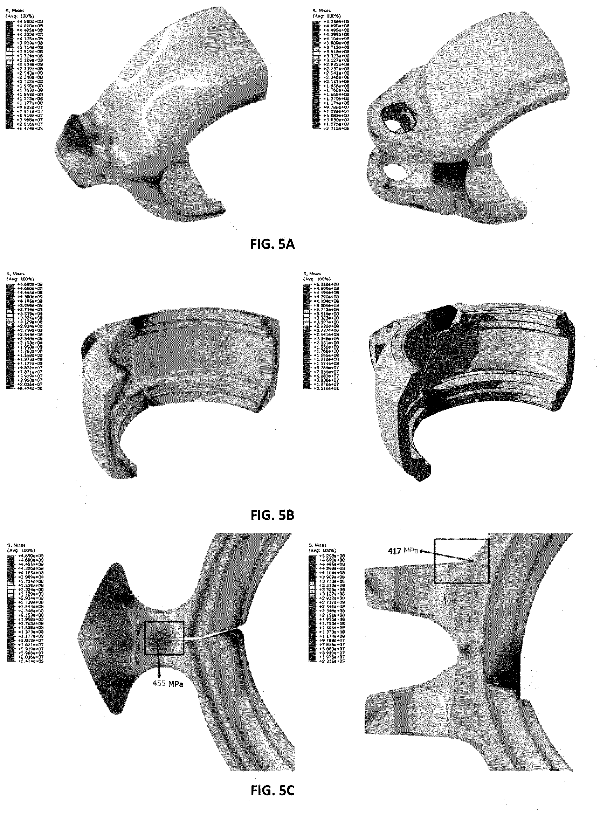

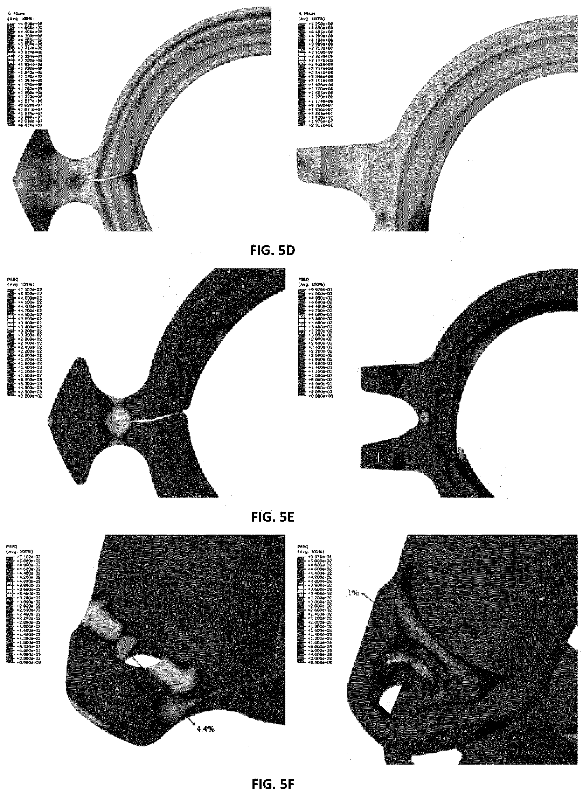

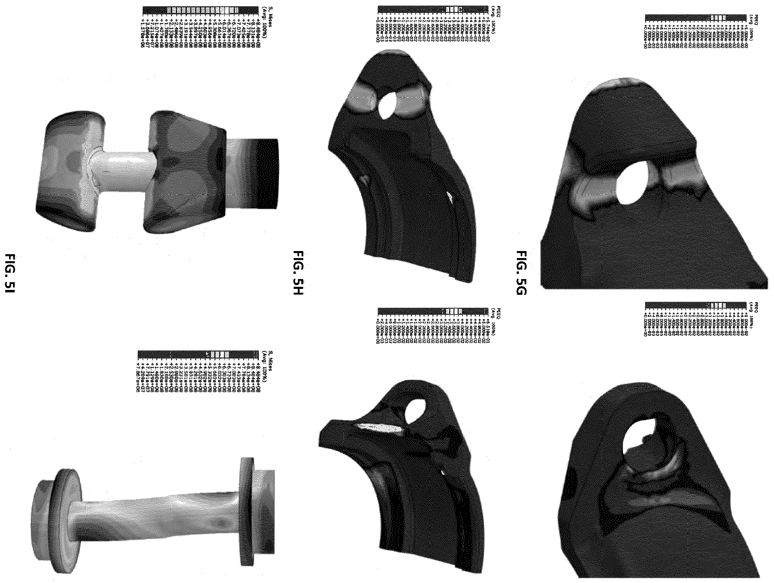

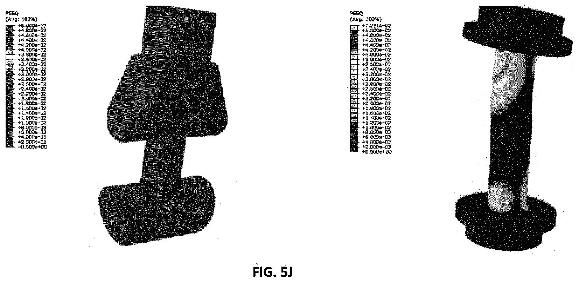

A tube coupling according to an embodiment of the invention (always on the left in **FIG.5**) was compared to a tube coupling having a bevelled face, as known from the prior art (always on the right in **FIG.5**)**.**

With the prior-art tube coupling, the bolt shank is subjected to a considerable bending stress by the oblique pads. Using the present model, a maximum prestressing force of approximately 34 kN is reached. For this reason the comparison is thus made at this prestressing force.

The von Mises stresses in the shells at 34 kN are shown in **FIG.5A** to **FIG.5D****.** The largest stress is found with the prior-art tube coupling at the location of contact between the two shells: 526 MPa. This is mainly a compression stress which is of lesser importance for a shell failing. In addition to this zone, the greatest stresses for the prior-art tube coupling are mainly found near the rounding between the bolt face and the remainder of the shell. The stresses here are approximately 417 MPa. With the tube coupling according to the invention, the greatest stresses of interest are found near the bolt which has a maximum value of 455 MPa. Both zones are clearly shown in **FIG. 5C****.** This means that the tube coupling according to the invention has a clamping force which is 9% greater than that of the prior-art tube coupling.

In order to be able to assess this better, **FIG.5E** to **FIG.5H** show the equivalent plastic strains.

FIG.5I and **FIG.5J** show the results in the bolts. Here, it is possible to decide that the tube coupling according to the invention is much more favourable.

As has been mentioned above, with the tube coupling according to the invention, relatively high strains are observed at the location of the bolt connections, but these are still within acceptable limits. In this case, it is interesting to note that this critical zone does not change significantly when the prestress increases from 34 to 52.2 kN.

## Claims

1. Segmented tube coupling comprising at least two arc-shaped coupling segments; wherein each coupling segment has a bolt plate at each end of said coupling segment; wherein each bolt plate is configured to be mutually connected to an adjacent bolt plate of an adjacent coupling segment;
wherein each bolt plate comprises an opening configured to receive the shank of a bolt through said opening;
wherein each bolt plate comprises a top surface and a bottom surface; wherein the top surface of each bolt plate preferably comprises a cutout, preferably configured to receive the head of an interface piece, a bolt and/or a nut; and,
wherein the first point of contact which is formed when the bottom surfaces of the two bolt plates touch during tightening, is situated on the radially outer side of the bolt plate with respect to the bolt, and wherein, in a completely tightened configuration, the bottom surfaces touch each other over a larger surface than only the first points of contact; and,
**characterised in that**, in the state in which the two arc-shaped coupling elements move towards each other and touch each other, the central angle of one of the arc-shaped coupling segments is greater than 180°, while the central angle of the other is smaller than 180°.

2. Segmented tube coupling according to Claim 1, wherein the central angle greater than 180° is achieved by a bend in the bolt plates.

3. Segmented tube coupling according to one of Claims 1 to 2, wherein, when only the (most) radially outward points of the bottom surfaces of the adjacent bolt plates touch each other, the bottom surfaces of the two bolt plates form an angle α of at least +0.5°.

4. Segmented tube coupling according to one of Claims 1 to 3, wherein the angle α is at least +0.5° and at most +10.0°, preferably at least +1.0° and at most +8.0°, preferably at least +2.0° and at most +6.0°, preferably at least +3.0° and at most +5.0°, preferably approximately +4.0°.

5. Segmented tube coupling according to one of Claims 1 to 4, wherein the bottom surface of each bolt plate is configured to allow the one or more most radially outward points of the bottom surface to touch the one or more most radially outward points of the bottom surface of an adjacent bolt plate of an adjacent coupling segment first, when mutually connecting adjacent bolt plates of adjacent coupling segments.

6. Segmented tube coupling according to one of Claims 1 to 5, wherein a triangular prism-shaped opening is present between the bottom surfaces of the adjacent bolt plates when the one or more most radially outward points of the bottom surfaces of the adjacent bolt plates touch each other when mutually connecting adjacent bolt plates of adjacent coupling segments, and wherein the triangular prism-shaped opening between the bottom surfaces of the adjacent bolt plates has a central angle β, measured from the centre of the tube coupling, of at least 1.0° when only the most radially outward points of the bottom surfaces of the adjacent bolt plates touch each other.

7. Segmented tube coupling according to one of Claims 1 to 6, wherein the bolt is a T-shaped bolt which comprises at least one arc-shaped side, and preferably wherein the top surface of each bolt plate comprises a cutout which is configured to be coupled to an interface piece, a head of a T-shaped bolt and/or a nut which comprises at least one arc-shaped side.

8. Segmented tube coupling according to one of Claims 1 to 7, wherein the tube coupling comprises at least two interface pieces, at least two bolts, and/or at least two nuts.

9. Assembly comprising the segmented tube coupling according to one of Claims 1 to 8 and two tube segments, each comprising a tube end, wherein a first arc-shaped coupling segment and a second arc-shaped coupling segment are positioned perpendicular to the axis in which the tube segments are aligned, with the inner surface of said first arc-shaped coupling segment and said second arc-shaped coupling segment touching the outer surface of said tube segments and said tube coupling covering said tube ends.

10. Assembly according to Claim 9, wherein the inner arc radius of the coupling segments is smaller than the outer arc radius of the tube segments, preferably wherein the inner arc radius of the coupling segments is approximately equal to the outer arc radius of a groove in the tube segments.

11. Method for producing a segmented tube coupling according to one of Claims 1 to 8, wherein the components of the tube coupling are manufactured separately and these components are then fitted together to form a tube coupling.

12. Method according to claim 11, wherein the segmented tube coupling is produced by heating, melting, mixing and transferring raw material, such as a metal, in a heat-resistant mould having a desired shape, then allowing the mould containing the raw material to cool and removing the mould.

13. Method for coupling two tube elements to each other, wherein each tube element comprises at least one tube end, comprising:
(i) inserting the two tube elements in a central space formed by at least two prefitted arc-shaped coupling segments of the tube coupling according to Claim 8; and
(ii) fastening the at least two interface pieces, at least two bolts and/or at least two nuts, so that the first arc-shaped coupling element and the second arc-shaped coupling element move towards each other and come into contact with each other.

14. Method according to Claim 13, wherein, when fastening the at least two interface pieces, at least two bolts and/or at least two nuts, the one or more most radially outward points of the bottom surface of a first bolt plate of a first coupling segment first touch the one or more most radially outward points of the bottom surface of a second, adjacent bolt plate of a second, adjacent coupling segment.

15. Use of a tube coupling according to one of Claims 1 to 8 or an assembly according to one of Claims 9 or 10 for coupling two tube ends to each other.

## Patentansprüche

1. Segmentierte Rohrverbindung, umfassend mindestens zwei bogenförmige Verbindungssegmente; wobei jedes Verbindungssegment eine Bolzenplatte an jedem Ende des Verbindungssegments aufweist; wobei jede Bolzenplatte dazu ausgelegt ist, mit einer angrenzenden Bolzenplatte eines angrenzenden Verbindungssegments verbunden zu sein;
wobei jede Bolzenplatte eine Öffnung umfasst, die dazu ausgelegt ist, den Schaft eines Bolzens durch die Öffnung aufzunehmen;
wobei jede Bolzenplatte eine obere Fläche und eine untere Fläche umfasst; wobei die obere Fläche jeder Bolzenplatte vorzugsweise einen Ausschnitt umfasst, der vorzugsweise dazu ausgelegt ist, den Kopf eines Zwischenstücks, eines Bolzens und/oder einer Mutter aufzunehmen; und
wobei der erste Berührungspunkt, der ausgebildet wird, wenn die untere Flächen der zwei Bolzenplatten einander beim Anziehen berühren, in Bezug zum Bolzen an der radialen Außenseite der Bolzenplatte angeordnet ist und wobei die untere Flächen in einer vollständig angezogenen Konfiguration einander über eine größere Fläche als nur die ersten Berührungspunkte berühren und
**dadurch gekennzeichnet, dass** in dem Zustand, in dem sich die zwei bogenförmigen Verbindungselemente aufeinander zubewegen und einander berühren, der Mittelwinkel eines der bogenförmigen Verbindungssegmente größer als 180° ist, während der Mittelwinkel des anderen kleiner als 180° ist.

2. Segmentierte Rohrverbindung nach Anspruch 1, wobei der Mittelwinkel, der größer als 180° ist, durch eine Krümmung der Bolzenplatten erreicht wird.

3. Segmentierte Rohrverbindung nach einem der Ansprüche 1 bis 2, wobei nur die (weitesten) radial äußeren Punkte der untere Flächen der angrenzenden Bolzenplatten einander berühren, wobei die untere Flächen der zwei Bolzenplatten einen Winkel α von mindestens +0,5° ausbilden.

4. Segmentierte Rohrverbindung nach einem der Ansprüche 1 bis 3, wobei der Winkel α mindestens +0,5° und höchstens +10,0°, vorzugsweise mindestens +1,0° und höchstens +8,0°, vorzugsweise mindestens +2,0° und höchstens +6,0°, vorzugsweise mindestens +3,0° und höchstens +5,0°, vorzugsweise etwa +4,0° beträgt.

5. Segmentierte Rohrverbindung nach einem der Ansprüche 1 bis 4, wobei die untere Fläche jeder Bolzenplatte dazu ausgelegt ist, zuzulassen, dass der eine oder die mehreren radial äußersten Punkte der untere Fläche den einen oder die mehreren radial äußersten Punkte der untere Fläche einer angrenzenden Bolzenplatte eines angrenzenden Verbindungssegments zuerst berühren, wenn angrenzende Bolzenplatten angrenzender Verbindungssegmente miteinander verbunden werden.

6. Segmentierte Rohrverbindung nach einem der Ansprüche 1 bis 5, wobei eine dreieckige, prismenförmige Öffnung zwischen den untere Flächen der angrenzenden Bolzenplatten vorhanden ist, wenn der eine oder die mehreren radial äußersten Punkte der untere Flächen der angrenzenden Bolzenplatten einander berühren, wenn angrenzende Bolzenplatten angrenzender Verbindungssegmente miteinander verbunden werden, und wobei die dreieckige, prismenförmige Öffnung zwischen den untere Flächen der angrenzenden Bolzenplatten, von der Mitte der Rohrverbindung gemessen, einen Mittelwinkel β von mindestens 1,0° aufweist, wenn nur die radial äußersten Punkte der untere Flächen der angrenzenden Bolzenplatten einander berühren.

7. Segmentierte Rohrverbindung nach einem der Ansprüche 1 bis 6, wobei der Bolzen ein T-förmiger Bolzen ist, der mindestens eine bogenförmige Seite umfasst, und vorzugsweise wobei die obere Fläche jeder Bolzenplatte einen Ausschnitt umfasst, der dazu ausgelegt ist, mit einem Zwischenstück, dem Kopf eines T-förmigen Bolzens und/oder einer Mutter, der/die mindestens eine bogenförmige Seite umfasst, verbunden zu sein.

8. Segmentierte Rohrverbindung nach einem der Ansprüche 1 bis 7, wobei die Rohrverbindung mindestens zwei Zwischenstücke, mindestens zwei Bolzen und/oder mindestens zwei Muttern umfasst.

9. Anordnung, umfassend die segmentierte Rohrverbindung nach einem der Ansprüche 1 bis 8 und zwei Rohrsegmente, die jeweils ein Rohrende umfassen, wobei ein erstes bogenförmiges Verbindungssegment und ein zweites bogenförmiges Verbindungssegment senkrecht zu der Achse positioniert sind, in der die Rohrsegmente ausgerichtet sind, wobei die Innenfläche des ersten bogenförmigen Verbindungssegments und des zweiten bogenförmigen Verbindungssegments die Außenfläche der Rohrsegmente und der die Rohrenden bedeckenden Rohrverbindung berühren.

10. Anordnung nach Anspruch 9, wobei der innere Bogenradius der Verbindungssegmente kleiner ist als der äußere Bogenradius der Rohrsegmente, vorzugsweise wobei der innere Bogenradius der Verbindungssegmente in etwa gleich dem äußeren Bogenradius einer Nut in den Rohrsegmenten ist.

11. Verfahren zur Herstellung einer segmentierten Rohrverbindung nach einem der Ansprüche 1 bis 8, wobei die Komponenten der Rohrverbindung separat gefertigt werden und diese Komponenten anschließend zusammengebaut werden, um eine Rohrverbindung auszubilden.

12. Verfahren nach Anspruch 11, wobei die segmentierte Rohrverbindung durch Erwärmen, Schmelzen, Vermischen und Übertragen eines Rohmaterials, zum Beispiel eines Metalls, in eine wärmebeständige Hohlform mit einer gewünschten Form und anschließendes abkühlen Lassen der das Rohmaterial enthaltenden Hohlform und Entnehmen aus der Hohlform hergestellt wird.

13. Verfahren zum Verbinden zweier Rohrelemente miteinander, wobei jedes Rohrelement mindestens ein Rohrende umfasst, Folgendes umfassend:
(i) Einsetzen der zwei Rohrelemente in einen mittigen Raum, der durch mindestens zwei vormontierte bogenförmige Verbindungssegmente der Rohrverbindung nach Anspruch 8 ausgebildet ist; und
(ii) Befestigen der mindestens zwei Zwischenstücke, mindestens zwei Bolzen und/oder mindestens zwei Muttern, sodass sich das erste bogenförmige Verbindungselement und das zweite bogenförmige Verbindungselement aufeinander zubewegen und einander berühren.

14. Verfahren nach Anspruch 13, wobei beim Befestigen der mindestens zwei Zwischenstücke, mindestens zwei Bolzen und/oder mindesten zwei Muttern der eine oder die mehreren radial äußersten Punkte der untere Fläche einer ersten Bolzenplatte eines ersten Verbindungssegments den einen oder die mehreren radial äußersten Punkte der untere Fläche einer zweiten, angrenzenden Bodenplatte eines zweiten, angrenzenden Verbindungssegments zuerst berühren.

15. Verwendung einer Rohrverbindung nach einem der Ansprüche 1 bis 8 oder einer Anordnung nach einem der Ansprüche 9 oder 10 zum Verbinden zweier Rohrenden miteinander.

## Revendications

1. Dispositif d'accouplement de tubes segmenté comprenant au moins deux segments d'accouplement arqués, chaque segment d'accouplement comportant une plaque à boulon à chaque extrémité dudit segment d'accouplement ; chaque plaque à boulon étant conçue pour un raccordement mutuel avec une plaque à boulon adjacente d'un segment d'accouplement adjacent ;
chaque plaque à boulon comprenant une ouverture conçue pour recevoir la tige d'un boulon à travers ladite ouverture ;
chaque plaque à boulon comprenant une surface supérieure et une surface inférieure ; la surface supérieure de chaque plaque à boulon comprenant, de préférence, une échancrure, de préférence conçue pour recevoir la tête d'une pièce intermédiaire, un boulon et/ou un écrou ; et
le premier point de contact formé, lorsque les surfaces inférieures des deux plaques à boulon entrent en contact lors du serrage, étant situé sur le côté radialement extérieur de la plaque à boulon par rapport au boulon et, dans une configuration complètement serrée, les surfaces inférieures étant en contact l'une avec l'autre sur une surface plus étendue que les premiers points de contact seulement ; et
**caractérisé en ce que**, dans l'état dans lequel les deux éléments d'accouplement arqués se déplacent l'un vers l'autre et entrent en contact, l'angle au centre de l'un des segments d'accouplement arqués est supérieur à 180°, tandis que l'angle au centre de l'autre est inférieur à 180°.

2. Dispositif d'accouplement de tubes segmenté selon la revendication 1, dans lequel l'angle au centre supérieur à 180° est obtenu par une courbure des plaques à boulon.

3. Dispositif d'accouplement de tubes segmenté selon l'une des revendications 1 à 2, dans lequel, lorsque seuls les points (les plus) radialement extérieurs des surfaces inférieures des plaques à boulon adjacentes sont en contact l'un avec l'autre, les surfaces inférieures des deux plaques à boulon forment un angle α d'au moins +0,5°.

4. Dispositif d'accouplement de tubes segmenté selon l'une des revendications 1 à 3, dans lequel l'angle α est d'au moins +0,5° et d'au plus +10,0°, de préférence d'au moins +1,0° et d'au plus +8,0°, de préférence d'au moins +2,0° et d'au plus +6,0°, de préférence d'au moins +3,0° et d'au plus +5,0°, de préférence d'approximativement +4,0°.

5. Dispositif d'accouplement de tubes segmenté selon l'une des revendications 1 à 4, dans lequel la surface inférieure de chaque plaque à boulon est conçue pour permettre au ou aux point(s) le(s) plus radialement extérieur(s)) de la surface inférieure d'entrer en premier en contact avec le ou les point(s) le(s) plus radialement extérieur(s) de la surface inférieure d'une plaque à boulon adjacente d'un segment d'accouplement adjacent, lors d'un raccordement mutuel de plaques à boulon adjacentes de segments d'accouplement adjacents.

6. Dispositif d'accouplement de tubes segmenté selon l'une des revendications 1 à 5, dans lequel une ouverture en forme de prisme triangulaire est définie entre les surfaces inférieures des plaques à boulon adjacentes lorsque le ou les point(s) le(s) plus radialement extérieur(s)) des surfaces inférieures des plaques à boulon adjacentes entrent en contact l'un avec l'autre lors d'un raccordement mutuel de plaques à boulon adjacentes de segments d'accouplement adjacents, et dans lequel l'ouverture en forme de prisme triangulaire entre les surfaces inférieures des plaques à boulon adjacentes présente un angle au centre β, mesuré depuis le centre du dispositif d'accouplement de tubes, d'au moins 1,0° lorsque seuls les points les plus radialement extérieurs des surfaces inférieures des plaques à boulon adjacentes sont en contact l'un avec l'autre.

7. Dispositif d'accouplement de tubes segmenté selon l'une des revendications 1 à 6, dans lequel le boulon est un boulon en T qui comprend au moins un côté arqué et, de préférence, dans lequel la surface supérieure de chaque plaque à boulon comprend une échancrure qui est conçue pour être accouplée à une pièce intermédiaire, une tête d'un boulon en T et/ou un écrou qui comprend au moins un côté arqué.

8. Dispositif d'accouplement de tubes segmenté selon l'une des revendications 1 à 7, le dispositif d'accouplement de tubes comprenant au moins deux pièces intermédiaires, au moins deux boulons et/ou au moins deux écrous.

9. Ensemble comprenant le dispositif d'accouplement de tubes segmenté selon l'une des revendications 1 à 8 et deux segments de tube, comprenant chacun une extrémité de tube, dans lequel un premier segment d'accouplement arqué et un second segment d'accouplement arqué sont placés perpendiculairement à l'axe sur lequel les segments de tube sont alignés, la surface intérieure dudit premier segment d'accouplement arqué et dudit second segment d'accouplement arqué étant en contact avec la surface extérieure desdits segments de tube et ledit dispositif d'accouplement de tubes recouvrant lesdites extrémités de tubes.

10. Ensemble selon la revendication 9, dans lequel le rayon d'arc intérieur des segments d'accouplement est inférieur au rayon d'arc extérieur des segments de tube, de préférence dans lequel le rayon d'arc intérieur des segments d'accouplement est approximativement égal au rayon d'arc extérieur d'une rainure dans les segments de tube.

11. Procédé de production d'un dispositif d'accouplement de tubes segmenté selon l'une des revendications 1 à 8, dans lequel les composants du dispositif d'accouplement de tubes sont fabriqués séparément et ces composants sont ensuite assemblés pour former un dispositif d'accouplement de tubes.

12. Procédé selon la revendication 11, dans lequel le dispositif d'accouplement de tubes segmenté est produit en chauffant, en faisant fondre, en mélangeant et en transférant de la matière première, telle qu'un métal, dans un moule résistant à la chaleur présentant une forme souhaitée, puis en laissant le moule contenant la matière première refroidir et en retirant le moule.

13. Procédé d'accouplement de deux éléments tubulaires l'un à l'autre, chaque élément tubulaire comprenant au moins une extrémité de tube, comprenant :
(i) insérer les deux éléments tubulaires dans un espace central formé par au moins deux segments d'accouplement arqués préassemblés du dispositif d'accouplement de tubes selon la revendication 8 ; et
(ii) fixer les au moins deux pièces intermédiaires, les au moins deux boulons et/ou les au moins deux écrous, de telle sorte que le premier élément d'accouplement arqué et le second élément d'accouplement arqué se déplacent l'un vers l'autre et viennent en contact l'un avec l'autre.

14. Procédé selon la revendication 13, dans lequel, lors de la fixation des au moins deux pièces intermédiaires, des au moins deux boulons et/ou des au moins deux écrous, le ou les point(s) le(s) plus radialement extérieur(s) de la surface inférieure d'une première plaque à boulon d'un premier segment d'accouplement entrent en premier en contact avec le ou les point(s) le(s) plus radialement extérieur(s) de la surface inférieure d'une seconde plaque à boulon adjacente d'un second segment d'accouplement adjacent.

15. Utilisation d'un dispositif d'accouplement de tubes selon l'une des revendications 1 à 8 ou d'un ensemble selon l'une des revendications 9 ou 10 pour accoupler deux extrémités de tubes l'une à l'autre.
